# EUROPEAN PATENT SPECIFICATION

(11) **EP 4 638 671 B1**
(45) Date of publication and mention of the grant of the patent: **29.07.2026**
(21) Application number: 23836588.6
(22) Date of filing: 14.12.2023
(51) Int. Cl.: C10M 143/00, C10M 143/04

(54) **CONTINUOUS PROCESS FOR REDUCING THE MOLECULAR WEIGHT OF ETHYLENE COPOLYMERS AND TERPOLYMERS**
KONTINUIERLICHES VERFAHREN ZUR REDUKTION DES MOLEKULARGEWICHTS VON ETHYLEN-COPOLYMEREN UND TERPOLYMEREN
PROCÉDÉ CONTINU POUR LA RÉDUCTION DU POIDS MOLÉCULAIRE DES COPOLYMÉRES ET TERPOLYMÉRES D'ÉTHYLÈNE

(30) Priority: 19.12.2022 IT 202200025962
(43) Date of publication of application: 29.10.2025
(73) Proprietor: Versalis S.p.A., 20097 San Donato Milanese (MI) (IT)
(72) Inventor: PIRINI, Maria Francesca, 48123 Ravenna (RA) (IT); MAZZINI, Andrea, 44122 Ferrara (FE) (IT); PERRETTA, Costantino, 44122 Ferrara (FE) (IT)
(74) Representative: Bottero, Carlo
(86) International application number: PCT/IB2023/062660
(87) International publication number: WO 2024/134392

(56) References cited:
- EP-A2- 1 632 504
- CA-A- 991 792
- GB-A- 1 397 994

## Description

The present invention relates to a continuous process for reducing the molecular weight of ethylene copolymers and terpolymers [EP(D)M)].

More specifically, the present invention relates to a continuous process for the reduction of the molecular weight of ethylene copolymers and terpolymers [EP(D)M] comprising the use of a single screw extruder equipped with a piston screw ("reciprocating single screw"), three conveying and mixing zones, a gear pump, an underwater die-face cutter, said three conveying and mixing zones and said gear pump operating at specific temperature ranges.

The ethylene copolymers and terpolymers [EP(D)M] obtained by the above process are advantageously usable as viscosity index improvers (V.I.I.) of lubricating oils.

Ethylene copolymers and terpolymers [EP(D)M)] are widely used in the field of lubricating oil additives [also known in the industry as Olefin CoPolymers (OCP)] as viscosity index improvers (V.I.I.) in order to modulate the viscosity of said lubricating oils with changing temperatures.

The micro/macrostructure of the ethylene copolymers and terpolymers [EP(D)M)], the weight-average molecular weight (M_{w}), the polydispersity index (PDI), i.e., the ratio between the weight-average molecular weight (M_{w}) and the number-average molecular weight (Mₙ) (M_{w}/Mₙ) of ethylene copolymers and terpolymers [EP(D)M)], as well as the amount of said ethylene copolymers and terpolymers [EP(D)M)] used, are all factors modifying the effect of said ethylene copolymers and terpolymers as viscosity index improvers (V.I.I.) of lubricating oils and the final properties of the formulations in which they are used.

Optimisation of the micro/macrostructure of ethylene copolymers and terpolymers [EP(D)M] allows the right compromise to be found in order to achieve the desired technological parameters.

Furthermore, since low molecular weights are essential for the application performance of viscosity index improvers (V.I.I.) of lubricating oils, and the processes usually used for the production of ethylene copolymers and terpolymers [EP(D)M)] (solution or slurry processes) often provide ethylene copolymers and terpolymers [EP(D)M] with significantly higher molecular weights, it is necessary to subject these ethylene copolymers and terpolymers [EP(D)M] to thermodegradation processes.

For example, European patent EP 1013673 relates to a process for reducing the molecular weight of a polymeric material selected from ethylene copolymers and terpolymers [EP(D)M)] or mixtures thereof, comprising treating the polymeric material with at least one hydroperoxide, said hydroperoxide being present in sufficient quantity to cause a reduction in molecular weight, at a temperature comprised between 80°C and 250°C, said ethylene copolymers and terpolymers [EP(D)M)] having a molar propylene content comprised between 16% and 50%. The resulting ethylene copolymers and terpolymers [EP(D)M] are said to have several applications, including use as viscosity index improvers (V.I.I.) of lubricating oils and the modification of high-fluidity plastics. The above process can be carried out in an extruder, preferably a twin-screw extruder.

European patent EP 1671982 relates to a process for the preparation of viscosity index improvers (V.I.I.) having improved dimensional stability and capable of improving the rheology of low-temperature lubricating oils, said process comprising the treatment of mixtures of linear polyethylene which is an ethylene homopolymer or copolymer characterised by a crystalline structure and a density comprised between 0.88 and 0.94 and amorphous ethylene copolymers and terpolymers [EP(D)M)], optionally blended with semi-crystalline ethylene copolymers and terpolymers [EP(D)M)], said treatment being carried out in an extruder, said treatment being carried out in the presence of one or more substances of a hydroperoxide nature and, optionally, in the presence of polyfunctional vinyl monomers in an amount comprised between 0% by weight and 2% by weight, said treatment being carried out at a shear value greater than 100 sec⁻¹ and at a temperature comprised between 75°C and 260°C, said amorphous ethylene copolymers and terpolymers [EP(D)M)] being characterised by an ethylene content comprised between 35% by weight and 62% by weight and a content of the third monomer comprised between 0% by weight and 10% by weight. The above process can be carried out in an extruder, preferably a twin-screw extruder.

European Patent EP 1632504 relates to a process for the preparation of viscosity index improvers (V.I.I.) involving treating, under high shear conditions, a composition comprising: (i) one or more ethylene copolymer(s) or terpolymer(s) [EP(D)M)] and (ii) one or more polyvinylarylene/hydrogenated conjugated diene/polyvinylarylene block copolymers, the ratio by weight (i)/(ii) being comprised between 98/2 and 80/20, said process being carried out at a temperature comprised between 150°C and 400°C. for a time not exceeding 150 seconds and at a shear value greater than 75 sec⁻¹. The above process can be carried out in an extruder, preferably a twin-screw extruder.

European Patent EP 1984479 relates to a process for the preparation of viscosity index improvers (V.I.I.) of lubricating oils comprising a mixing treatment under shear conditions greater than 50 sec⁻¹, of a composition comprising:
(i) one or more ethylene copolymers or terpolymers [EP(D)M)];
(ii) one or more polyvinylarylene/hydrogenated conjugated diene/polyvinylarylene block copolymers;
(iii) lubricating oil;
(ii) being present at a concentration comprised between 1.5% by weight and 20% by weight and (iii) being present at a concentration comprised between 1.5% by weight and 45% by weight.

The above process can be carried out in an extruder, preferably a twin-screw extruder.

Canadian Patent CA 991792 relates to a continuous process for producing a lubricating oil additive by thermal degradation in an extruder, under non-oxidising conditions, of a substantially linear, high molecular weight, amorphous ethylene-propylene hydrocarbon copolymer containing 25%-50% by weight of polymerised propylene, 0%-5% by weight of a polymerised non-conjugated hydrocarbon diene and the remainder, polymerised ethylene, said process comprising: uniformly mixing and heating the copolymer in an initial zone at a temperature comprised between about 150°C and 280°C until the copolymer is uniformly melted, said temperature being below the degradation temperature of the copolymer; passing the molten copolymer into a second zone where it is uniformly mixed and heated to a temperature comprised between about 300°C and 500°C, until a degraded copolymer is obtained whose inherent viscosity is lower than the inherent viscosity of the starting copolymer and is comprised between 0.1 dl/g and 1.8 dl/g, measured on a solution of 0.1 g of copolymer in 100 ml of tetrachloroethylene at 30°C, and whose molecular weight distribution is substantially less than or equal to that of the starting copolymer; removing the degraded copolymer from the second zone; cooling and recovering the degraded copolymer that is substantially colourless or white and contains an insubstantial amount of oil insoluble material.

However, the above processes may have some drawbacks. For example, in order to obtain ethylene copolymers and terpolymers [EP(D)M)] with molecular weights suitable for use as viscosity index improvers (V.I.I.), it may be necessary to use hydroperoxides, or to operate at high temperatures (up to 500°C), which require operating in an inert atmosphere (for example, in the presence of nitrogen) and which may lead to gel formation and branching in the final product. Furthermore, in order to improve the dimensional stability of the ethylene copolymers and terpolymers [EP(D)M)] obtained, it may be necessary to use small amounts of polyvinylarylene/hydrogenated conjugated diene/polyvinylarylene block copolymers or polyfunctional vinyl monomers.

The Applicant therefore set out to solve the problem of finding a continuous process for the reduction of the molecular weight of ethylene copolymers and terpolymers [EP(D)M] that could advantageously be used as viscosity index improvers (V.I.I.) of lubricating oils, able to overcome the above-mentioned drawbacks.

The Applicant has now come up with a continuous process for reducing the molecular weight of ethylene copolymers and terpolymers [EP(D)M] comprising the use of a single screw extruder equipped with a reciprocating single screw, three conveying and mixing zones, a gear pump, an underwater die-face cutter, said three conveying and mixing zones and said gear pump operating at specific temperature ranges. In particular, the Applicant has found that the use of said single screw extruder allows to obtain ethylene copolymers and terpolymers [EP(D)M)] having molecular weights suitable for use as viscosity index improvers (V.I.I.) in the absence of hydroperoxides, operating at lower temperatures than in the prior art so as to avoid both operating in an inert atmosphere and the formation of gels and branching in the final product. Furthermore, said process does not require the use of polyvinylarylene/hydrogenated conjugated diene/polyvinylarylene block copolymers or polyfunctional vinyl monomers in order to improve the dimensional stability of the final product.

It is therefore an object of the present invention to provide a continuous process for reducing the molecular weight of ethylene copolymers and terpolymers [EP(D)M)] comprising the following stages:
(a) providing at least one single screw extruder comprising a chamber, a reciprocating single screw mounted in said chamber, said reciprocating single screw being capable of rotating and oscillating within said chamber, said chamber having at least one feeding opening and at least one discharging opening, said extruder comprising three conveying and mixing zones, a gear pump, an underwater die-face cutter;
(b) feeding at least one ethylene copolymer or terpolymer [EP(D)M)] into said single screw extruder;
(c) conveying said at least one ethylene copolymer or terpolymer [EP(D)M)] through a first conveying and mixing zone which operates at a temperature comprised between 140°C and 260°C, preferably comprised between 150°C and 250°C, wherein said ethylene copolymer or terpolymer [EP(D)M)] is uniformly mixed and heated and uniformly softened;
(d) conveying said at least one uniformly softened ethylene copolymer or terpolymer [EP(D)M)] leaving said first conveying and mixing zone to a second conveying and mixing zone which operates at a temperature comprised between 220°C and 330°C, preferably comprised between 230°C and 320°C, wherein said ethylene copolymer or terpolymer [EP(D)M)] is further mixed and heated and partially degraded;
(e) conveying said at least one partially degraded ethylene copolymer or terpolymer [EP(D)M)] leaving said second conveying and mixing zone to a third conveying and mixing zone which operates at a temperature comprised between 170°C and 340°C, preferably comprised between 180°C and 330°C, wherein said ethylene copolymer or terpolymer [EP(D)M)] is further mixed and heated and further degraded;
(f) conveying said at least one further degraded ethylene copolymer or terpolymer [EP(D)M)] leaving said third conveying and mixing zone to said gear pump which operates at a temperature comprised between 170°C and 340°C, preferably comprised between 180°C and 330°C, wherein said ethylene copolymer or terpolymer [EP(D)M)] is further degraded;
(g) recovering said at least one further degraded ethylene copolymer or terpolymer [EP(D)M)] leaving said underwater die-face cutter.

For the purpose of the present description and the following claims, the definitions of the numerical ranges always comprise the extreme values unless otherwise specified.

For the purpose of the present description and the following claims, the term "comprising" also includes the terms "which essentially consists of" or "which consists of".

For the purpose of the present invention, a single-screw extruder equipped with a reciprocating single screw, three conveying and mixing zones, a gear pump, and an underwater die-face cutter, which also has the following features, can be used:
- with respect to a conventional single-screw extruder in which the screw is in the form of a continuous spiral, the reciprocating single screw has threads interrupted at radial intervals of 120° and pins or teeth coordinated with these threads are inserted in the barrel;
- compared to a conventional single-screw extruder in which the screw movement consists solely of rotation, the movement of the reciprocating single screw consists of rotation and oscillation, in fact the rotation of the reciprocating single screw is superimposed by an oscillation (or axial stroke) that results in improved mixing and degradation capability within the extruder;
- the oscillation frequency of the axial motion ("reciprocating action") is the same as the rotational speed and a gear system ensures that for each rotation of the reciprocating single screw a full forward and backward stroke is performed;
- the amplitude of oscillation is approximately 20 mm;
- during the performance of the above-mentioned full forward and backward stroke, the paths traced by said pins (or teeth) cover and clean the entire surface of the reciprocating single screw so as to avoid the presence of areas with stagnation of material, in practice said threads ("kneading flights") sway around said pins (or teeth) and this allows a very uniform speed gradient between said threads ("kneading flights") and said pins;
- the combination of the rotary and axial movement of the reciprocating single screw produces an extensional flow with a strong dispersive mixing action between threads ("kneading flights") and pins;
- the fusion of the ethylene copolymer or terpolymer [EP(D)M] takes place in the gap between the threads ("kneading flights") and the pin;
- due to the aforementioned improved mixing capacity, the ethylene copolymer or terpolymer [EP(D)M)] does not exhibit inhomogeneity in terms of solid and molten parts, rather said ethylene copolymer or terpolymer [EP(D)M)] melts at the same time, resulting in high viscosities, particularly in the first two mixing zones, which generate high shear stress values.

More details on the aforementioned single-screw extruder can be found, for example, in Elemans P. H. M. and Mejer H. E. H, "Polymer Engineering and Science" (1990), Mid-August, Vol. 30, No. 15, pp. 893-904.

In accordance with a preferred embodiment of the present invention, said single-screw extruder operates at a screw speed comprised between 220 rpm and 300 rpm, preferably comprised between 230 rpm and 280 rpm.

In accordance with a preferred embodiment of the present invention, said single-screw extruder operates at a flow rate comprised between 300 kg/h and 700 kg/h, preferably comprised between 400 kg/h and 600 kg/h.

Upon exiting said underwater die-face cutter, the degraded ethylene copolymer or terpolymer [EP(D)M] is in the form of "pellets" that are separated from the water, for example by centrifugation, and subsequently sent by pneumatic conveying to the drying and packaging section.

In accordance with a preferred embodiment of the present invention, said ethylene copolymer or terpolymer [EP(D)M] comprises:
- from 20% by weight to 90% by weight, preferably from 40% by weight to 85% by weight, with respect to the total weight of said ethylene copolymer or terpolymer [EP(D)M)] of ethylene;
- from 10% by weight to 80% by weight, preferably from 15% by weight to 60% by weight, with respect to the total weight of said ethylene copolymer or terpolymer [EP(D)M)] of propylene;
- from 0% by weight to 12% by weight, preferably from 0% by weight to 5% by weight, with respect to the total weight of said ethylene copolymer or terpolymer [EP(D)M)] of a non-conjugated diene.

In accordance with a preferred embodiment of the present invention, said ethylene copolymer or terpolymer [EP(D)M] has the following features:
- weight average molecular weight (M_{w}) comprised between 115000 Da and 500000 Da, preferably comprised between 120,000 Da to 450,000 Da, more preferably comprised between 125000 Da and 250000 Da;
- a polydispersion index (PDI), i.e. the ratio between the weight average molecular weight (M_{w}) and the number average molecular weight (Mₙ) (M_{w}/Mₙ), lower than 5, preferably comprised between 1.8 and 4.5, more preferably comprised between 1.9 and 3.5.

In accordance with a preferred embodiment of the present invention, the optionally present non-conjugated diene may be selected, for example, from:
- non-conjugated linear chain dienes such as, for example, 1,4-hexadiene, 1,6-octadiene;
- non-conjugated branched chain acyclic dienes such as, for example, 5-methyl-1,4-hexadiene, 3,7-dimethyl-1,6-octadiene, 3,7-dimethyl-1,7-octadiene;
- non-conjugated single ring alicyclic dienes such as, for example, 1,4-cyclohexadiene, 1,5-cyclooctadiene, 1,5-cyclododecadiene;
- non-conjugated dienes having condensed or bridged alicyclic rings such as, for example, methyltetrahydroindene, dicyclopentadiene, bicyclo[2.2.1]hepta-2,5-diene, C₁-C₈-alkenyl-norbornenes, C₂-C₈-alkylidene-norbornenes, C₃-C₁₂-cyclo-alkenyl-norbornenes, C₃-C₁₂-cycloalkylidene-norbornenes such as, for example 5-methylene-2-norbornene, 5-ethylidene-2-norbornene (ENB), 5-propenyl-2-norbornene; preferably, said non-conjugated diene is 5-ethylidene-2-norbornene (ENB).

Both amorphous and semi-crystalline ethylene copolymers or terpolymers [EP(D)M], alone or in a mixture with each other, can be advantageously used for the purpose of the process of the present invention.

Ethylene copolymers and terpolymers [EP(D)M] that can be advantageously used for the purpose of the present invention and that are currently commercially available are Dutral^{®} CO products by Versalis.

The ethylene copolymers and terpolymers [EP(D)M)] obtained by the above process have the following features:
- weight average molecular weight (M_{w}) comprised between 50000 Da and 140000 Da, preferably comprised between 75000 Da and 120000 Da;
- a polydispersity index (PDI), i.e. the ratio between the weight-average molecular weight (M_{w}) and the number-average molecular weight (Mₙ) (M_{w}/Mₙ), lower than 5, preferably comprised between 1.8 and 4.5, more preferably comprised between 1.9 and 3.5;
- a thickening power (TP) comprised between 4 cSt and 7 cSt;
- a shear stability index (SSI) comprised between 20% and 30%.

The aforementioned ethylene copolymers and terpolymers [EP(D)M] are advantageously usable as viscosity index improvers (V.I.I.) of lubricating oils.

Preferably, the aforementioned ethylene copolymers and terpolymers [EP(D)M)] can be used in lubricating oils selected from mineral base oils or from synthetic base oils.

Accordingly, it is a further object of the present invention the use of the ethylene copolymers and terpolymers obtained by the process according to the present invention, as viscosity index improvers (V.I.I.) of lubricating oils, said lubricating oils being preferably selected from mineral base oils, or from synthetic base oils.

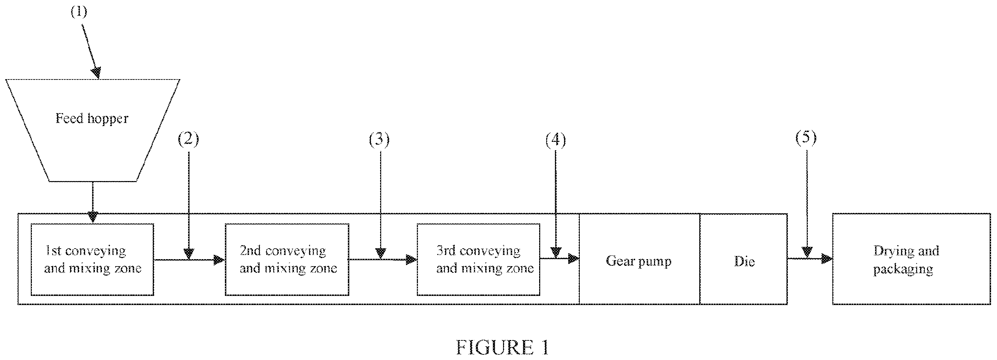

Figure 1 below shows an embodiment of the process object of the present invention as well as a block diagram of the plant and the single-screw extruder used in said process, for illustrative and non-limiting purposes only.

Specifically, in Figure 1, the ethylene copolymer or terpolymer [EP(D)M)] (1) is fed through the feed hopper to the single-screw extruder equipped with three conveying and mixing zones, a gear pump and an underwater die-face cutter, said three conveying and mixing zones and said gear pump operating at specific temperature ranges. In particular, the ethylene copolymer or terpolymer [EP(D)M)] (1) through the first conveying and mixing zone is uniformly mixed and heated and uniformly softened obtaining the ethylene copolymer or terpolymer [EP(D)M)] (2) which is conveyed to the second conveying and mixing zone where it is further mixed and heated and partially degraded, resulting in the partially degraded ethylene copolymer or terpolymer [EP(D)M)] (3) which is conveyed to the third conveying and mixing zone where it is further mixed and heated and further degraded obtaining further degraded ethylene copolymer or terpolymer [EP(D)M] (4) which is conveyed to the gear pump obtaining further degraded ethylene copolymer or terpolymer [EP(D)M] (5) which is recovered at the exit from the underwater die-face cutter in the form of "pellets" which are separated from the water, for example by centrifugation, and subsequently sent by pneumatic conveying to the drying and packaging section.

In order to better understand the present invention and to put it into practice, some illustrative and non-limiting examples thereof are reported below.

The analysis and characterization methods reported below were used.

### ¹³C-NMR and ¹H-NMR spectra

The ¹³C-NMR and ¹H-NMR spectra were recorded at 120°C by nuclear magnetic resonance spectrometer mod. Bruker Avance 300, equipped with 10 mm probe and variable temperature.

For this purpose, polymer solutions of the degraded ethylene copolymers and terpolymers [EP(D)M)] obtained by the process object of the present invention were used, having concentrations of 10%-15% w/v (g/mL) prepared using deuterated tetrachloroethane (C₂D₂Cl₄) at 120°C and tetramethylsilane (TMS) as an internal standard.

The structure of the degraded ethylene copolymers and terpolymers [EP(D)M)] obtained by the process object of the present invention [i.e., content of ethylene (%), propylene (%) and optionally non-conjugated diene] was determined by analysis of the above spectra on the basis of what has been reported in the literature by Di Martino S., Kelchterrmans M., in "Journal of Applied Polymer Science" (1995), Vol. 56, Issue 13, p. 1781-1787 (Method No. 3, page 1784).

### Determination of the molecular weight

The determination of the weight average molecular weight (M_{w}), the number average molecular weight (Mₙ) and the polydispersity index (PDI) corresponding to the ratio M_{w}/Mₙ, of the degraded ethylene copolymers and terpolymers [EP(D)M)] obtained by the process object of the present invention was carried out by means of GPC ("Gel Permeation Chromatography"), using the integrated instrument HT-GPC PL220 by Agilent Technologies which uses three lines of detection refractive index ("IR"), viscometer ("VS") and dual angle laser light scattering ("DALLS"), operating under the following conditions:
- a pre-column (Guard column) with dimensions 50 x 7.5 mm and a particle size of 10 µm;
- three GPC columns by Agilent Technologies with dimensions 300 x 7.5 mm, particle size of 10 µm with mixed porosity;
- Mettler XPR 225 analytical balance;
- laboratory glassware;
- distillation and degassing system for solvent recovery;
- 50 ml automatic distributors;
- pL-SP-260 automatic dissolver by Agilent Technologies;
- column injection temperature: 135°C;
- temperature of columns and detection lines: 135°C;
- solvent/eluent: 1,2-dichlorobenzene (99+% for HPLC - Acros Organics^{™});
- flow rate: 1 ml/min;
- calculation of molecular mass via universal calibration curve.

These operating conditions were continuously monitored using a personal computer equipped with Agilent GPC/SEC software by Agilent Technologies.

Calibration was carried out as follows.

A solution was prepared in 1,2-dichlorobenzene (99+% for HPLC - Acros Organics^{™}) containing a polystyrene (PS) standard with a nominal peak molecular weight (Mₚ) of 100 kDa, in order to carry out the determination of the interdetector delay (IDD) and the calibration constants of the four signals (RID, VS, LS15° and LS90°).

Seven solutions in 1,2-dichlorobenzene (99+% for HPLC - Acros Organics^{™}) were also prepared, each containing two monodisperse polystyrene (PS) standards with different nominal peak molecular weights (Mₚ) and at different concentrations: the molecular weights were chosen so that the eluted chromatographic peaks were well separated, while the choice of concentrations of each standard was inversely proportional to the molecular weight. The range of the different nominal peak molecular weights (Mₚ) of said standards used for the calibration curve was comprised between 2 kDa and 7000 kDa.

The different solutions were prepared, under stirring, at room temperature (25°C) in the above-mentioned PL-SP-260 automatic dissolver by Agilent Technologies.

The calibration curve was calculated using a personal computer equipped with the aforementioned Agilent GPC/SEC software by Agilent Technologies, using a 3rd order polynomial function.

### Determination of thickening power (TP)

The thickening power (TP) was determined in accordance with ASTM D7042-04.

### Determination of the shear stability index (SSI)

The shear stability index (SSI) was determined in accordance with ASTM D7109-12.

### EXAMPLE 1 (invention)

The amorphous ethylene propylene copolymer Dutral^{®} CO 058 (Versalis) having:
- 54% by weight of ethylene;
- 46% by weight of propylene;
- weight average molecular weight (M_{w}) 190000 Da;
- polydispersity index (PDI) of 2.2;
was fed to a single-screw extruder (BUSS MDK 140 by Aaron Equipment) with a reciprocating screw, equipped with three conveying and mixing zones, a gear pump and an underwater die-face cutter, with a diameter of 140 mm and a ratio between the length (L) and the diameter (D) (L/D) equal to 11, at a flow rate of 500 kg/h, said extruder operating under the following conditions:
- rotation speed of the screw: 260 rpm;
- temperature profile 1^{st} zone: 160°C - 210°C;
- temperature profile 2^{nd} zone: 270°C - 310°C;
- temperature profile 3^{rd} zone: 280°C - 320°C;
- gear pump temperature: 280°C - 320°C.

Upon exiting the underwater die-face cutter (cutting speed equal to 2700 rpm), the degraded and cooled copolymer was recovered in the form of "pellets" that were subjected to centrifugation to separate them from the water and then sent by pneumatic conveying to the drying and packaging section.

The degraded copolymer obtained was subjected to NMR and GPC ("Gel Permeation Chromatography") analysis operating as described above, obtaining the following values:
- 54% by weight of ethylene;
- 46% by weight of propylene;
- weight average molecular weight (M_{w}) of 80000 Da;
- polydispersity index (PDI) of 2.2.

### EXAMPLE 2 (invention)

A mixture consisting of:
- 70% by weight of semi-crystalline ethylene propylene copolymer Dutral^{®} CO 034 (Versalis) having the following features:
   - 68% by weight of ethylene;
   - 32% by weight of propylene;
   - weight average molecular weight (M_{w}) 130000 Da;
   - polydispersity index (PDI) of 2.2;
- 30% by weight of amorphous ethylene propylene copolymer Dutral^{®} CO 058 (Versalis) having the above features;
was fed to a single-screw extruder (BUSS MDK 140 by Aaron Equipment) with a reciprocating screw, equipped with three conveying and mixing zones, a gear pump and an underwater die-face cutter, with a diameter of 140 mm and a ratio between the length (L) and the diameter (D) (L/D) equal to 11, at a flow rate of 500 kg/h, said extruder operating under the following conditions:
- rotation speed of the screw: 280 rpm;
- temperature profile 1^{st} zone: 180°C - 240°C;
- temperature profile 2^{nd} zone: 250°C - 300°C;
- temperature profile 3^{rd} zone: 190°C - 300°C.
- gear pump temperature: 190°C - 300°C.

Upon exiting the underwater die-face cutter (cutting speed equal to 2700 rpm), the degraded and cooled copolymer was recovered in the form of "pellets" that were subjected to centrifugation to separate them from the water and then sent by pneumatic conveying to the drying and packaging section.

The degraded copolymer obtained was subjected to NMR and GPC ("Gel Permeation Chromatography") analysis operating as described above, obtaining the following values:
- 63.5% by weight of ethylene;
- 36.5% by weight of propylene;
- weight average molecular weight (M_{w}) of 85000 Da;
- polydispersity index (PDI) of 2.2.

### EXAMPLE 3 (comparative)

The amorphous ethylene propylene copolymer Dutral^{®} CO 058 (Versalis) having:
- 54% by weight of ethylene;
- 46% by weight of propylene;
- weight average molecular weight (M_{w}) 190000 Da;
- polydispersity index (PDI) of 2.2;
was fed to a single-screw extruder (Goettfert 20D by Goetffert GmBH) without a reciprocating screw, equipped with three conveying and mixing zones and a die, with a diameter equal to 2 mm and a ratio between the length (L) and the diameter (D) (L/D) equal to 20, at a flow rate of 1 kg/h, said extruder operating under the following conditions:
- rotation speed of the screw: 100 rpm;
- temperature profile 1^{st} zone: 160°C - 180°C;
- temperature profile 2^{nd} zone: 290°C - 310°C;
- temperature profile 3^{rd} zone: 300°C - 320°C;
- cooling in a water bath.

Upon exiting the die, the degraded and cooled copolymer was recovered in the form of "spaghetti" that were air-dried.

The copolymer obtained was subjected to NMR and GPC ("Gel Permeation Chromatography") analysis operating as described above, obtaining the following values:
54% by weight of propylene;
46% by weight of ethylene;

- weight average molecular weight (Mw) of 150000 Da;
- polydispersity index (PDI) of 2.2.

### EXAMPLE 4 (comparative)

A mixture consisting of:
- 70% by weight of semi-crystalline ethylene propylene copolymer Dutral^{®} CO 034 (Versalis) having the following features:
   - 68% by weight of ethylene;
   - 32% by weight of propylene;
   - weight average molecular weight (M_{w}) 130000 Da;
   - polydispersity index (PDI) of 2.2;
- 30% by weight of amorphous ethylene propylene copolymer Dutral^{®} CO 058 (Versalis) having the above features;
was fed to a single-screw extruder (Goettfert 20D by Goetffert GmBH) without a reciprocating screw, equipped with three conveying and mixing zones and a die, with a diameter equal to 2 mm and a ratio between to length (L) and the diameter (D) (L/D) equal to 20, at a flow rate of 1 kg/h, said extruder operating under the following conditions:
- rotation speed of the screw: 100 rpm;
- temperature profile 1^{st} zone: 160°C - 180°C;
- temperature profile 2^{nd} zone: 270°C - 300°C;
- temperature profile 3^{rd} zone: 290°C - 320°C;
- cooling in a water bath.

Upon exiting the die, the degraded and cooled copolymer was recovered in the form of "spaghetti" that were air-dried.

The copolymer obtained was subjected to NMR and GPC ("Gel Permeation Chromatography") analysis operating as described above, obtaining the following values:
- . 63.5% by weight of propylene;
- . 36.5% by weight of ethylene;
- weight average molecular weight (Mw) of 160000 Da;
- polydispersity index (PDI) of 2.2.

### EXAMPLE 5 (invention)

### Evaluation as viscosity index improvers (V.I.I.) of lubricating oils

For this purpose, the degraded ethylene propylene copolymers (EPR) obtained in Examples 1 (invention), 2 (invention), 3 (comparative) and 4 (comparative) were dissolved in an amount equal to 1% by weight in the reference base oil SN 150 Group I (Eni S.p.A.).

The solutions obtained were used to determine the thickening power (TP) in accordance with ASTM D7402-04 and the shear stability index (SSI) in accordance with ASTM D7109-12, as listed above: the results are shown in Table 2.

The SN 150 base oil has the following features:
- kinematic viscosity (KV) 100°C equal to 5.3 cSt;
- pour point equal to - 15°C.

**Table 2**

| | Thickening power (TP) (cSt) | Shear stability index (SSI) (%) |
|---|---|---|
| Ethylene propylene copolymer (EPR) | 5.8 | 29 |
| Example 1 (invention) (1% by weight) | | |
| Ethylene propylene copolymer (EPR) | 6.9 | 26 |
| Example 2 (invention) (1% by weight) | | |
| Ethylene propylene copolymer (EPR) | 10 | 51 |
| Example 3 (comparative) (1% by weight) | | |
| Ethylene propylene copolymer (EPR) | 12 | 52 |
| Example 4 (comparative) (1% by weight) | | |

The data in Table 2 show that the ethylene-propylene copolymers (EPR) obtained using a non-reciprocating single-screw extruder [Example 3 (comparative) and Example 4 (comparative)] do not give the desired results when used as viscosity index improvers.

## Claims

1. Continuous process for reducing the molecular weight of ethylene copolymers and terpolymers [EP(D)M)] comprising the following stages:
(a) providing at least one single screw extruder comprising a chamber, a reciprocating single screw mounted in said chamber, said reciprocating single screw being capable of rotating and oscillating within said chamber, said chamber having at least one feeding opening and at least one discharging opening, said extruder comprising three conveying and mixing zones, a gear pump, an underwater die-face cutter;
(b) feeding at least one ethylene copolymer or terpolymer [EP(D)M)] into said single screw extruder;
(c) conveying said at least one ethylene copolymer or terpolymer [EP(D)M)] through a first conveying and mixing zone which operates at a temperature comprised between 140°C and 260°C, preferably comprised between 150°C and 250°C, wherein said ethylene copolymer or terpolymer [EP(D)M)] is uniformly mixed and heated and uniformly softened;
(d) conveying said at least one uniformly softened ethylene copolymer or terpolymer [EP(D)M)] leaving said first conveying and mixing zone to a second conveying and mixing zone which operates at a temperature comprised between 220°C and 330°C, preferably comprised between 230°C and 320°C, wherein said ethylene copolymer or terpolymer [EP(D)M)] is further mixed and heated and partially degraded;
(e) conveying said at least one partially degraded ethylene copolymer or terpolymer [EP(D)M)] leaving said second conveying and mixing zone to a third conveying and mixing zone which operates at a temperature comprised between 170°C and 340°C, preferably comprised between 180°C and 330°C, wherein said ethylene copolymer or terpolymer [EP(D)M)] is further mixed and heated and further degraded;
(f) conveying said at least one further degraded ethylene copolymer or terpolymer [EP(D)M)] leaving said third conveying and mixing zone to said gear pump which operates at a temperature comprised between 170°C and 340°C°C, preferably comprised between 180°C and 330°C, wherein said ethylene copolymer or terpolymer [EP(D)M)] is further degraded;
(g) recovering said at least one further degraded ethylene copolymer or terpolymer [EP(D)M)] leaving said underwater die-face cutter.

2. Continuous process for reducing the molecular weight of ethylene copolymers and terpolymers [EP(D)M)] according to claim 1, wherein said single screw extruder operates at a rotation speed of the screw comprised between 220 rpm and 300 rpm, preferably comprised between 230 rpm and 280 rpm.

3. Continuous process for reducing the molecular weight of ethylene copolymers and terpolymers [EP(D)M)] according to claim 1 or 2, wherein said single screw extruder operates at a flow rate comprised between 300 kg/h and 700 kg/h, preferably comprised between 400 kg/h and 600 kg/h.

4. Continuous process for reducing the molecular weight of ethylene copolymers and terpolymers [EP(D)M)] according to any one of the preceding claims, wherein said ethylene copolymer or terpolymer [EP(D)M)] comprises:
- from 20% by weight to 90% by weight, preferably from 40% by weight to 85% by weight, with respect to the total weight of said ethylene copolymer or terpolymer [EP(D)M)] of ethylene;
- from 10% by weight to 80% by weight, preferably from 15% by weight to 60% by weight, with respect to the total weight of said ethylene copolymer or terpolymer [EP(D)M)] of propylene;
- from 0% by weight to 12% by weight, preferably from 0% by weight to 5% by weight, with respect to the total weight of said ethylene copolymer or terpolymer [EP(D)M)] of a non-conjugated diene.

5. Continuous process for reducing the molecular weight of ethylene copolymers and terpolymers [EP(D)M)] according to any one of the preceding claims, wherein said ethylene copolymer or terpolymer [EP(D)M)] has the following features:
- weight average molecular weight (Mw) comprised between 115000 Da and 500000 Da, preferably comprised between 120000 Da and 450000 Da, more preferably comprised between 125000 Da and 250,000 Da;
- a polydispersion index (PDI), i.e. the ratio between the weight average molecular weight (M_{w}) and the number average molecular weight (Mₙ) (M_{w}/Mₙ), lower than 5, preferably comprised between 1.8 and 4.5, more preferably comprised between 1.9 and 3.5.

6. Continuous process for reducing the molecular weight of ethylene copolymers and terpolymers [EP(D)M)] according to claim 4, wherein the optionally present non-conjugated diene is selected from:
- non-conjugated linear chain dienes such as 1,4-hexadiene, 1,6-octadiene;
- non-conjugated branched chain acyclic dienes such as 5-methyl-1,4-hexadiene, 3,7-dimethyl-1,6-octadiene, 3,7-dimethyl-1,7-octadiene;
- non-conjugated single ring alicyclic dienes such as 1,4-cyclohexadiene, 1,5-cyclooctadiene, 1,5-cyclododecadiene;
- non-conjugated dienes having condensed or bridged alicyclic rings such as methyltetrahydroindene, dicyclopentadiene, bicyclo[ 2.2.1]hepta-2,5-diene, C₁-C₈-alkenyl-norbornenes, C₂-C₈ -alkylidene-norbornenes, C₃-C₁₂-cycloalkenyl-norbornenes, C₃-C₁₂-cycloalkylidene-norbornenes such as, for example, 5-methylene-2-norbornene, 5-ethylidene-2-norbornene (ENB), 5-propenyl-2-norbornene;
preferably, said non-conjugated diene is 5-ethylidene-2-norbornene (ENB).

7. Use of the ethylene copolymers and terpolymers [EP(D)M)] obtained with the process according to any one of the preceding claims, as viscosity index improvers (V.I.I.) of lubricating oils, said lubricating oils being preferably selected from mineral base oils, or from synthetic base oils.

## Patentansprüche

1. Kontinuierliches Verfahren zur Verringerung des Molekulargewichts von Ethylen-Copolymeren und -Terpolymeren [EP(D)M)], das die folgenden Stufen umfasst:
(a) Bereitstellen mindestens eines Einschneckenextruders, umfassend eine Kammer, eine in der Kammer gelagerte, reziprokierende Einzelschnecke, wobei die reziprokierende Einzelschnecke in der Kammer rotieren und oszillieren kann, die Kammer mindestens eine Zuführöffnung und mindestens eine Austragsöffnung aufweist, wobei der Extruder drei Förder- und Mischzonen, eine Zahnradpumpe sowie einen Unterwasser-Düsenschneider umfasst;
(b) Zuführen mindestens eines Ethylen-Copolymers oder -Terpolymers [EP(D)M] in den Einschneckenextruder;
(c) Fördern des mindestens einen Ethylen-Copolymers oder -Terpolymers [EP(D)M)] durch eine erste Förder- und Mischzone, die bei einer Temperatur zwischen 140 °C und 260 °C, vorzugsweise zwischen 150 °C und 250 °C, betrieben wird, wobei das Ethylen-Copolymer oder - Terpolymer [EP(D)M)] gleichmäßig vermischt und erwärmt sowie gleichmäßig erweicht wird;
(d) Fördern des mindestens einen gleichmäßig erweichten Ethylen-Copolymers oder -Terpolymers [EP(D)M)] aus der ersten Förder- und Mischzone in eine zweite Förder- und Mischzone, die bei einer Temperatur zwischen 220 °C und 330 °C, vorzugsweise zwischen 230 °C und 320 °C, betrieben wird, wobei das Ethylen-Copolymer oder -Terpolymer [EP(D)M)] weiter vermischt und erhitzt sowie teilweise abgebaut wird;
(e) Fördern des mindestens einen teilweise abgebauten Ethylen-Copolymers oder -Terpolymers [EP(D)M)] aus der zweiten Förder- und Mischzone in eine dritte Förder- und Mischzone, die bei einer Temperatur zwischen 170 °C und 340 °C, vorzugsweise zwischen 180 °C und 330 °C, betrieben wird, wobei das Ethylen-Copolymer oder -Terpolymer [EP(D)M] weiter gemischt und erhitzt sowie weiter abgebaut wird;
(f) Fördern des mindestens einen weiter abgebauten Ethylen-Copolymers oder -Terpolymers [EP(D)M] aus der dritten Förder- und Mischzone zu der Zahnradpumpe, die bei einer Temperatur zwischen 170 °C und 340 °C, vorzugsweise zwischen 180 °C und 330 °C, betrieben wird, wobei das Ethylen-Copolymer oder -Terpolymer [EP(D)M)] weiter abgebaut wird;
(g) Rückgewinnen des mindestens einen weiter abgebauten Ethylen-Copolymers oder -Terpolymers [EP(D)M)], das den Unterwasser-Düsenschneider verlässt.

2. Kontinuierliches Verfahren zur Verringerung des Molekulargewichts von Ethylen-Copolymeren und -Terpolymeren [EP(D)M)] nach Anspruch 1, wobei der Einschneckenextruder mit einer Drehzahl der Schnecke zwischen 220 U/min und 300 U/min, vorzugsweise zwischen 230 U/min und 280 U/min, betrieben wird.

3. Kontinuierliches Verfahren zur Verringerung des Molekulargewichts von Ethylen-Copolymeren und -Terpolymeren [EP(D)M] nach Anspruch 1 oder 2, wobei der Einschneckenextruder mit einer Durchflussrate zwischen 300 kg/h und 700 kg/h, vorzugsweise zwischen 400 kg/h und 600 kg/h, betrieben wird.

4. Kontinuierliches Verfahren zur Verringerung des Molekulargewichts von Ethylen-Copolymeren und -Terpolymeren [EP(D)M)] nach einem der vorstehenden Ansprüche, wobei das Ethylen-Copolymer oder -Terpolymer [EP(D)M)] umfasst:
- 20 Gew.-% bis 90 Gew.-%, vorzugsweise 40 Gew.-% bis 85 Gew.-%, bezogen auf das Gesamtgewicht des Ethylen-Copolymers oder -Terpolymers [EP(D)M], an Ethylen;
- 10 Gew.-% bis 80 Gew.-%, vorzugsweise 15 Gew.-% bis 60 Gew.-%, bezogen auf das Gesamtgewicht des Ethylen-Copolymers oder -Terpolymers [EP(D)M], an Propylen;
- 0 Gew.-% bis 12 Gew.-%, vorzugsweise 0 Gew.-% bis 5 Gew.-%, bezogen auf das Gesamtgewicht des Ethylen-Copolymers oder -Terpolymers [EP(D)M], eines nichtkonjugierten Diens.

5. Kontinuierliches Verfahren zur Verringerung des Molekulargewichts von Ethylen-Copolymeren und -Terpolymeren [EP(D)M] nach einem der vorstehenden Ansprüche, wobei das Ethylen-Copolymer oder -Terpolymer [EP(D)M] die folgenden Merkmale aufweist:
- ein gewichtsmittleres Molekulargewicht (Mw) im Bereich von 115000 Da bis 500000 Da, vorzugsweise im Bereich von 120000 Da bis 450000 Da, noch bevorzugter im Bereich von 125000 Da bis 250.000 Da;
- einen Polydispersitätsindex (PDI), d.h. das Verhältnis zwischen dem gewichtsmittleren Molekulargewicht (M_{w}) und dem zahlenmittleren Molekulargewicht (Mₙ) (M_{w}/Mₙ), der kleiner als 5 ist, vorzugsweise im Bereich von 1,8 bis 4,5 liegt, noch bevorzugter im Bereich von 1,9 bis 3,5 liegt.

6. Kontinuierliches Verfahren zur Verringerung des Molekulargewichts von Ethylen-Copolymeren und -Terpolymeren [EP(D)M)] nach Anspruch 4, wobei das optional vorhandene nichtkonjugierte Dien ausgewählt ist aus:
- nichtkonjugierten linearen Dienen wie 1,4-Hexadien, 1,6-Octadien;
- nichtkonjugierten verzweigten, acyclischen Dienen wie 5-Methyl-1,4-hexadien, 3,7-Dimethyl-1,6-octadien, 3,7-Dimethyl-1,7-octadien;
- nichtkonjugierten alicyclischen Dienen mit einem einzigen Ring, wie beispielsweise 1,4-Cyclohexadien, 1,5-Cyclooctadien, 1,5-Cyclododecadien;
- nichtkonjugierten Dienen mit kondensierten oder verbrückten alicyclischen Ringen wie Methyltetrahydroinden, Dicyclopentadien, Bicyclo[2.2.1]hepta-2,5-dien, C₁-C₈-Alkenyl-Norbornene, C₂-C₈ -Alkyliden-Norbornene, C₃-C₁₂-Cycloalkenyl-Norbornene, C₃-C₁₂-Cycloalkyliden-Norbornene, wie beispielsweise 5-Methylen-2-norbornen, 5-Ethyliden-2-norbornen (ENB), 5-Propenyl-2-norbornen;
vorzugsweise ist das nichtkonjugierte Dien 5-Ethyliden-2-norbornene (ENB).

7. Verwendung der nach einem der vorstehenden Ansprüche erhaltenen Ethylen-Copolymere und -Terpolymere [EP(D)M)] als Viskositätsindexverbesserer (V.I.I.) für Schmieröle, wobei die Schmieröle vorzugsweise aus mineralischen Grundölen oder aus synthetischen Grundölen ausgewählt sind.

## Revendications

1. Procédé continu de réduction de la masse moléculaire de copolymères et terpolymères d'éthylène [EP(D)M)], comprenant les étapes suivantes consistant à:
(a) mettre à disposition au moins une extrudeuse monovis comprenant un cylindre, une monovis à mouvement de va-et-vient montée dans ledit cylindre, ladite monovis à mouvement de va-et-vient pouvant tourner et osciller à l'intérieur dudit cylindre, ledit cylindre présentant au moins une ouverture d'alimentation et au moins une ouverture de décharge, ladite extrudeuse comprenant trois zones d'acheminement et de mélange, une pompe à engrenages, un dispositif de coupe sous eau en tête de filière;
(b) introduire au moins un copolymère ou terpolymère d'éthylène [EP(D)M] dans ladite extrudeuse monovis;
(c) acheminer ledit au moins un copolymère ou terpolymère d'éthylène [EP(D)M)] à travers une première zone d'acheminement et de mélange qui fonctionne à une température comprise entre 140 °C et 260 °C, de préférence comprise entre 150 °C et 250 °C, où ledit copolymère ou terpolymère d'éthylène [EP(D)M)] est uniformément mélangé et chauffé et uniformément ramolli;
(d) acheminer ledit au moins un copolymère ou terpolymère d'éthylène [EP(D)M)] uniformément ramolli, quittant ladite première zone d'acheminement et de mélange, vers une deuxième zone d'acheminement et de mélange qui fonctionne à une température comprise entre 220 °C et 330 °C, de préférence comprise entre 230 °C et 320 °C, où ledit copolymère ou terpolymère d'éthylène [EP(D)M)] est mélangé et chauffé davantage et partiellement dégradé;
(e) acheminer ledit au moins un copolymère ou terpolymère d'éthylène [EP(D)M)]partiellement dégradé, quittant ladite deuxième zone d'acheminement et de mélange, vers une troisième zone d'acheminement et de mélange qui fonctionne à une température comprise entre 170 °C et 340 °C, de préférence comprise entre 180 °C et 330 °C, où ledit copolymère ou terpolymère d'éthylène [EP(D)M)] est mélangé et chauffé davantage et dégradé davantage;
(f) acheminer ledit au moins un copolymère ou terpolymère d'éthylène [EP(D)M)] dégradé davantage, quittant ladite troisième zone d'acheminement et de mélange, vers ladite pompe à engrenages qui fonctionne à une température comprise entre 170 °C et 340 °C, de préférence comprise entre 180 °C et 330 °C, où ledit copolymère ou terpolymère d'éthylène [EP(D)M)] est dégradé davantage;
(g) récupérer ledit au moins un copolymère ou terpolymère d'éthylène [EP(D)M] dégradé davantage, quittant le dispositif de coupe sous eau en tête de filière.

2. Procédé continu de réduction de la masse moléculaire de copolymères et terpolymères d'éthylène [EP(D)M)] selon la revendication 1, dans lequel ladite extrudeuse monovis fonctionne à une vitesse de rotation de la vis comprise entre 220 tr/min et 300 tr/min, de préférence comprise entre 230 tr/min et 280 tr/min.

3. Procédé continu de réduction de la masse moléculaire de copolymères et terpolymères d'éthylène [EP(D)M)] selon la revendication 1 ou 2, dans lequel ladite extrudeuse monovis fonctionne à un débit compris entre 300 kg/h et 700 kg/h, de préférence compris entre 400 kg/h et 600 kg/h.

4. Procédé continu de réduction de la masse moléculaire de copolymères et terpolymères d'éthylène [EP(D)M)] selon l'une quelconque des revendications précédentes, dans lequel ledit copolymère ou terpolymère d'éthylène [EP(D)M)] comprend:
- de 20 % en poids à 90 % en poids, de préférence de 40 % en poids à 85 % en poids, par rapport au poids total dudit copolymère ou terpolymère d'éthylène [EP(D)M], d'éthylène;
- de 10 % en poids à 80 % en poids, de préférence de 15 % en poids à 60 % en poids, par rapport au poids total dudit copolymère ou terpolymère d'éthylène [EP(D)M], de propylène;
- de 0 % en poids à 12 % en poids, de préférence de 0 % en poids à 5 % en poids, par rapport au poids total dudit copolymère ou terpolymère d'éthylène [EP(D)M], d'un diène non conjugué.

5. Procédé continu de réduction de la masse moléculaire de copolymères et terpolymères d'éthylène [EP(D)M)] selon l'une quelconque des revendications précédentes, dans lequel ledit copolymère ou terpolymère d'éthylène [EP(D)M)] présente les caractéristiques suivantes:
- une masse moléculaire moyenne en poids (Mw) comprise entre 115 000 Da et 500 000 Da, de préférence comprise entre 120 000 Da et 450 000 Da, plus préférablement comprise entre 125 000 Da et 250 000 Da;
- un indice de polydispersité (PDI), à savoir le rapport entre la masse moléculaire moyenne en poids (M_{w}) et la masse moléculaire moyenne en nombre (Mₙ) (M_{w}/Mₙ), inférieur à 5, de préférence compris entre 1,8 et 4,5, plus préférablement compris entre 1,9 et 3,5.

6. Procédé continu de réduction de la masse moléculaire de copolymères et terpolymères d'éthylène [EP(D)M)] selon la revendication 4, dans lequel le diène non conjugué présent en option est choisi parmi:
- les diènes à chaîne linéaire non conjugués tels que le 1,4-hexadiène, le 1,6-octadiène;
- les diènes acycliques à chaîne ramifiée non conjugués tels que le 5-méthyl-1,4-hexadiène, le 3,7-diméthyl-1,6-octadiène, le 3,7-diméthyl-1,7-octadiène;
- les diènes alicycliques monocycliques non conjugués tels que le 1,4-cyclohexadiène, le 1,5-cyclooctadiène, le 1,5-cyclododécadiène;
- les diènes non conjugués comportant des cycles alicycliques condensés ou pontés, tels que le méthyltétrahydro-indène, le dicyclopentadiène, le bicyclo[2.2.1]hepta-2,5-diène, les alcényl(C₁-C₈)-norbornènes, les alkylidène(C₂-C₈)-norbornènes, les cycloalcényl(C₃-C₁₂)-norbornènes, les cycloalkylidène(C₃-C₁₂)-norbornènes, tels que, par exemple, le 5-méthylène-2-norbornène, le 5-éthylidène-2-norbornène (ENB), le 5-propényl-2-norbornène;
de préférence, ledit diène non conjugué est le 5-éthylidène-2-norbornène (ENB).

7. Utilisation des copolymères et terpolymères d'éthylène [EP(D)M] obtenus par le procédé selon l'une quelconque des revendications précédentes, en tant qu'agents améliorant l'indice de viscosité (V.I.I.) d'huiles lubrifiantes, lesdites huiles lubrifiantes étant de préférence choisies parmi les huiles de base minérales ou parmi les huiles de base synthétiques.
